# EUROPÄISCHE PATENTSCHRIFT

(11) **EP 1 540 293 B1**
(45) Veröffentlichungstag und Bekanntmachung des Hinweises auf die Patenterteilung: **10.06.2009**
(21) Anmeldenummer: 03747993.8
(22) Anmeldetag: 09.09.2003
(51) Int. Cl.: G01L 9/00, G01L 19/04, G01L 19/06

(54) **KAPAZITIVER DRUCKSENSOR**
CAPACITIVE PRESSURE SENSOR
CAPTEUR DE PRESSION CAPACITIF

(30) Priorität: 16.09.2002 DE 10243079
(43) Veröffentlichungstag der Anmeldung: 15.06.2005
(73) Patentinhaber: Endress + Hauser GmbH + Co. KG., 79689 Maulburg (DE)
(72) Erfinder: DREWES, Ulfert, 79379 Müllheim (DE); GETMAN, Igor, 79539 Lörrach (DE); HEGNER, Frank, 79540 Lörrach (DE)
(74) Vertreter: Andres, Angelika Maria
(86) Internationale Anmeldenummer: PCT/EP2003/010009
(87) Internationale Veröffentlichungsnummer: WO 2004/031716

(56) Entgegenhaltungen:
- DE-A- 4 213 857
- DE-A- 4 219 178
- DE-A- 4 407 212
- DE-A- 4 416 978
- US-A- 5 712 428
- US-A- 6 055 864
- US-B1- 6 363 790

## Beschreibung

Die Erfindung betrifft einen kapazitiven Drucksensor, insbesondere einen kapazitiven keramischen Drucksensor.

Derartige Drucksensoren werden vielfach in der Prozeßmeßtechnik eingesetzt, um den Druck von Prozeßmedien zu messen, die als Flüssigkeiten, Gase oder Dämpfe vorliegen können. Im wesentlichen umfassen derartige Drucksensoren eine Druckmeßzelle aus einem Grundkörper und einer elastischen Membran, insbesondere aus einem keramischen Grundkörper und einer keramischen Membran. Am Grundkörper ist eine flache Ausnehmung vorgesehen, die auch als Membranbett bezeichnet wird und die von der Membran überdeckt wird. Im Meßbetrieb wird die Membran mit dem Druck eines Prozeßmediums beaufschlagt, und die Verformung der elastischen Membran, die beispielsweise kapazitiv oder resistiv ermittelt wird, ist ein Maß für den Druck. Eine entsprechende Druckmeßzelle ist u.a. in der deutschen Offenlegungsschrift DE 39 01 492 offenbart.

Im Meßbetrieb wird eine Druckmeßzelle gewöhnlich axial eingespannt zwischen einem medienseitigen elastischen Dichtring, der auf der membranseitigen Stirnfläche des Sensors aufliegt, und einem Stützring, welcher die von der Membran abgewandte Stirnfläche des Grundkörpers axial abstützt, wie beispielsweise in der deutschen Offenlegungsschrift DE 42 13 857 dargestellt ist.

Insofern, als die Verformung der Membran bei gegebenem Druck von der effektiven Membransteifigkeit abhängt, ist es erforderlich, die Membransteifigkeit nach der Kalibrierung über den Meßbereich des Drucksensors, möglichst konstant zu halten. Es ist daher besonders wichtig, daß möglichst wenige radiale Kräfte auf die Druckmeßzelle wirken, da radial einwärts wirkende Kräfte die Membransteifigkeit verringern und radial auswärts wirkende Kräfte die Membransteifigkeit vergrößern können.

In der ebenfalls anhängigen deutschen Patentanmeldung mit dem Aktenzeichen 10229703.7 beschreibt die Anmelderin, daß die axiale Einspannung einer Druckmeßzelle zwischen einem Dichtring und einem Stützring eine elastische Durchbiegung der rückseitigen Stirnfläche des Grundkörpers in axialer Richtung bewirkt. Die Durchbiegung führt zu radialen Verformungen des Grundkörpers im Bereich der membranseitigen Stirnfläche, wenn die Geometrie des Stützrings nicht auf die Geometrie der Druckmeßzelle abgestimmt ist. Hierbei erweist sich der Innendurchmesser des Stützringes als besonders kritische Größe. Ist die Auflagefläche des Stutzrings zu groß, bzw. ist der Innendurchmesser zu klein, so bewirken die axialen Einspannkräfte, die durch den Dichtring mit dem Durchmesser in die Druckmeßzelle bzw. den Grundkörper eingeleitet werden, Biegemomente in der Druckmeßzelle, welche eine in der Summe radial auswärts gerichtete Verformung der Meßmembran verursachen. In ähnlicher Weise wird die dem Dichtring zugewandte Stirnfläche radial einwärts elastisch verformt, wenn die Auflagefläche des Stützrings zu klein bzw. der Innendurchmesser des Stützrings zu groß ist.

Die beschriebenen stirnseitigen radialen Verformungen wären grundsätzlich vertretbar, wenn sie konstant gehalten werden könnten. Dies ist jedoch nicht praktikabel, da die radialen Verformungen eine Funktion der axialen Einspannkräfte sind, welche insbesondere von der Alterung bzw. Temperung des elastischen Dichtrings abhängen, über den die axialen Einspannkräfte eingeleitet werden. Beispielsweise kann die axiale Einspannkraft irreversibel von 500 N auf etwa 400 N reduziert werden, wenn ein Drucksensor mit einem neu eingesetzten Dichtring auf 80°C erwärmt wird.

Veränderungen der radialen Verformung sind praktisch also nur durch ein Design zu verhindern, bei dem selbst bei maximaler axialer Einspannkraft keine nennenswerten radialen Verformungen auftreten.

Die Lösung der genannte deutschen Patentanmeldung mit dem Aktenzeichen 10229703.7 beruht daher darauf, für eine Druckmeßzelle mit vorgegebenen Abmessungen und Materialeigenschaften einen Innendurchmesser des Stützrings zu identifizieren, bei dem die radiale Verformung der Druckmeßzelle im Bereich der Fügestellen der Meßmembran weitgehend eliminiert ist, so daß die Variation der Membransteifigkeit aufgrund der sich verändernden axialen Einspannkräfte bis auf einen vertretbaren Restfehler minimiert ist.

Der Drucksensor gemäß der 10229703.7 umfaßt eine Druckmeßzelle mit einem im wesentlichen zylindrischen Grundkörper mit einem ersten Durchmesser und einer ersten Dicke, einen an einer Stirnfläche des Grundkörpers gefügten Meßmembran mit einem zweiten Durchmesser und einer zweiten Dicke, wobei die Druckmeßzelle axial eingespannt ist zwischen einem elastischen Dichtring mit einem dritten Durchmesser und einer dritten Dicke, der auf der membranseitigen Stirnseite der Druckmeßzelle aufliegt, und einem Stützring mit einem vierten Außendurchmesser, einem vierten Innendurchmesser und einer vierten Dicke, wobei der Stützring die von der Meßmembran abgewandte rückwärtige Stirnseite der Druckmeßzelle abstützt; wobei ferner die Abmessungen des Stützrings solchermaßen auf die Abmessungen des Dichtrings und der Druckmesszelle abgestimmt sind, daß eine durch die axiale Einspannung der Druckmeßzelle bedingte radiale Verformung der membranseitigen Stirnfläche so gering ist, daß der Spannenfehler des Drucksensors aufgrund einer Reduzierung der axialen Einspannkraft um mindestens 10% nicht mehr als etwa 0,02% der Spanne beträgt.

Der Spannenfehler bezeichnet in diesem Zusammenhang die Abweichung der bei reduzierter axialer Einspannkraft auftretenden Differenz zwischen dem Meßwert bei Maximaldruck und dem Meßwert ohne Druckbeaufschlagung von der entsprechenden Differenz bei voller axialer Einspannkraft.

Die volle axiale Einspannkraft bezeichnet beispielsweise die axiale Einspannkraft, mit der Drucksensoren mit neuen Dichtringen montiert werden, um auch nach einer Temperung bzw. Alterung des Dichtrings den spezifikationsgemäßen Druck sicher halten zu können können. Die axiale Einspannkraft kann beispielsweise zwischen 350 N und 550 N liegen, wobei die gewählte Einspannkraft im Einzelfall von der Art der Dichtung und dem Nenndruck bzw. den Spezifikationen des Drucksensors abhängt.

Jüngere experimentelle Untersuchungen haben nun ergeben, daß Varianten, bei denen der Stützring fest mit dem Grundkörper verbunden oder einstückig mit diesem ausgebildet ist, hinsichtlich des Spannenfehlers beherrschbarer sind. D.h., der Spannenfehler nimmt einen beliebig geringen Wert an und streut kaum zwischen verschiedenen Meßzellen eines Typs.

Die Ergebnisse hinsichtlich der Temperaturhysterese der Spanne sind für diese Varianten jedoch unbefriedigend, d.h., der durch Hysterese bedingte Fehler der Spanne ist zu groß.

Die Temperaturhysterese ist nach derzeitigem Verständnis eine Folge unzureichender Relaxation an den Grenzflächen zwischen Komponenten mit unterschiedlichen Wärmeaus-dehnungskoeffizienten. Besonders kritisch ist in diesem Zusammenhang die Grenzfläche zwischen einem Gewindering bzw. Einspannring zum Einspannen des Stützrings.

Es ist daher die Aufgabe der vorliegenden Erfindung einen Drucksensor bereitzustellen, bei dem neben dem Spannenfehler aufgrund der Veränderung der axialen Einspannung auch die Temperaturhysterese reduziert ist.

Die Aufgabe wird erfindungsgemäß gelöst durch den Drucksensor, gemäß des unabhängigen Patentanspruchs 1 und das Verfahren gemäß des unabhängigen Patentanspruchs 9.

Der erfindungsgemäße Drucksensor umfasst
eine Druckmeßzelle mit einem im wesentlichen zylindrischen Grundkörper aus Korund mit einem ersten Durchmesser und einer ersten Dicke, einen an einer Stirnfläche des Grundkörpers gefügten Meßmembran aus Korund mit einem zweiten Durchmesser und einer zweiten Dicke,
einen elastischen Dichtring mit einem dritten Durchmesser und einer dritten Dicke,
einen Stützring aus Korund mit einem vierten Außendurchmesser, einem vierten Innendurchmesser und einer vierten Dicke, wobei der Stützring mit der von der Meßmembran abgewandten Stirnseite der Druckmeßzelle fest verbunden ist,
wobei der Stützring mindestens die Dicke des Grundkörpers aufweist,
wobei der Außendurchmesser des Stützrings gleich dem Durchmesser des Grundkörpers ist.
einen Einspannring mit ersten Eingriffsmitteln und
ein Gehäuse zur Aufnahme einer Druckmeßzelle, wobei das Gehäuse eine axiale Anschlagfläche für den Dichtring und zweite Eingriffsmittel, die in die ersten Eingriffsmittel eingreifen, aufweist,
wobei die Druckmeßzelle zwischen dem elastischen Dichtring, der zwischen der axialen Anschlagfläche des Gehäuses und der membranseitigen Stirnseite der Druckmeßzelle angeordnet ist, und dem Stützring, mittels des Einspannrings axial eingespannt ist,
**dadurch gekennzeichnet, daß**
zwischen dem Einspannring und dem Stützring ein steifes Entkopplungselement aus Korund angeordnet ist, wobei
das Entkopplungselement eine Entkopplungsplatte oder einen Entkopplungsring aufweist, wobei zwischen dem Entkopplungsring und dem Stützring Mittel zur Minimierung der Reibung einbringbar sind, wobei
die Abmessungen des Stützrings umfassed den Innendurchmesser und des Entkopplungselements solchermaßen auf die Abmessungen des Dichtrings und der Druckmesszelle abgestimmt sind, daß eine durch die axiale Einspannung der Druckmeßzelle bedingte radiale Verformung der membranseitigen Stirnfläche so gering ist, daß der Spannenfehler des Drucksensors aufgrund einer Reduzierung der axialen Einspannkraft um mindestens 20% nicht mehr als etwa 0,02% beträgt und die Temperaturhysterese der Spanne
nach einem Temperaturzyklus von Raumtemperatur über -40 °C und 150°C zurück auf Raumtemperatur oder nach einem Temperaturzyklus von Raumtemperatur über 150 °C und -40 °C zurück auf Raumtemperatur nicht mehr als etwa 0.03 % beträgt.

Die Temperaturhysterese kann beispielsweise durch Vergleichsmessungen vor und nach einem Temperaturzyklus ermittelt werden bei dem der Sensor von Raumtemperatur auf 150°C erwärmt, danach auf -40°C abgekühlt und anschließend wieder auf Raumtemperatur erwärmt wird. Gleichermaßen kann zuerst eine Abkühlung auf die Minimaltemperatur auch vor der Erwärmung auf die Maximaltemperatur erfolgen.

Bevorzugt sind die Abmesungen des Stützrings und ggf. des Entkopplungselements so weit optimiert, daß der Spannenfehler bei einer Reduzierung der Einspannkraft um mindestens 10% bzw. mindestens 20% nicht mehr als etwa 0,01% beträgt.

Zudem können die die Abmessungen des Stützrings und ggf. des Entkopplungselements so weit optimiert werden, daß die Temperaturhysterese der Spanne nicht mehr als 0,02% und besonders bevorzugt nicht mehr als 0,01% beträgt.

Der Grundkörper und die Meßmembran sind aus dem gleichen Material gefertigt, nämlich Korund. Die Meßmembran weist den gleichen Durchmesser wie der Grundkörper auf. Bei keramischen Drucksensoren kann die Meßmembran mittels eines Aktivhartlots oder eines Glases an der Stirnseite des Grundkörpers befestigt sein. In einer weiteren bevorzugten Ausführungsform umfaßt die Fügestelle einen Sinterkorund.

Der Stützring weist ebenfalls das gleiche Material wie der Grundkörper auf. Dies ist insofern vorteilhaft, als der Stützring dann den gleichen Wärmeausdehnungskoeffizienten wie der Grundkörper aufweist. Der Stützring sollte vorzugsweise ein Material aufweisen das mindestens so steif ist wie der Grundkörper. Der Außendurchmesser des Stützrings ist gleich dem Durchmesser des Grundkörpers. Der Stützring ist fest mit dem Grundkörper verbunden. Dies kann durch Löten, beispielsweise mit einem Aktivhartlot, oder durch Kleben erfolgen. Schließlich kann der Stützring einstückig mit dem Grundkörper gefertigt sein. Der Stützring weist mindestens die Dicke des Grundkörpers auf.

Das Entkopplungselement ist insofern steif, als das Material des Entkopplungselements vergleichbare mechanische Eigenschaften aufweist, wie das Material des Stützrings. Bevorzugt weist das Entkopplungselement das gleiche Material auf wie der Stützring.

Das Entkopplungselement dient insbesondere dazu Verformungen des Stützrings aufgrund unterschiedlicher thermischer Ausdehnungskoeffizienten des Einspannrings, des Gehäuses und des Stützrings zu minimieren.

Derzeit sind zwei Varianten von Entkopplungselementen bevorzugt:

Bei der ersten Variante umfaßt das Entkopplungselement einen Entkopplungsring, der bevorzugt die gleichen Innen- und Außendurchmesser wie der Stützring aufweist. Weiter bevorzugt hat der Entkopplungsringetwa die gleiche Dicke wie der Stützring. Der Entkopplungsring lastet flächig auf dem Stützring. Optional sind Mittel vorgesehen, um die Reibung zwischen dem Entkopplungsring und dem Stützring zu minimieren. Hierzu kann eine Kunststoffschicht bzw. -folie, beispielsweise Teflon, eine Hartstoffglattschicht, wie DLC (Diamond Like Carbon), oder ein Gleitmittel wie Molybdändisulfid eingesetzt werden.

Bei der zweiten Variante umfaßt das Entkopplungselement eine Versteifungsplatte. Die Versteifungsplatte kann entweder lose auf dem Stützring aufliegen, fest mit dem Stützring verbunden oder einstückig mit dem Stützring ausgebildet sein. Hinsichtlich der Reduzierung der Temperaturhysterese, hat die Verbindung der Versteifungsplatte mit dem Stützring nach derzeitiger Erkenntnis keinen Einfluß. Bevorzugt weist die Versteifungsplatte den gleichen Durchmesser wie der Außendurchmesser des Stützrings auf. Insbesondere die Dicke der Versteifungsplatte ist ein Parameter der bei der Optimierung des erfindungsgemäßen Sensors variiert werden kann.

Der Einspannring umfaßt vorzugsweise einen Gewindering wobei die ersten Eingriffsmittel durch das Gewinde auf der Mantelfläche des Gewinderings realisiert sind. Die zweiten Eingriffsmittel sind entsprechend ein Innengewinde in einem zylindrischen Gehäuseabschnitt, in welches der Gewindering eingreift, um über das Entkopplungselement und den Stützring eine axiale Einspannkraft auf die Druckmeßzelle auszuüben.

Die Erfindung wird nun anhand eines in den beigefügten Figuren dargestellten Ausführungsbeispiels erläutert. Es zeigt:
- Fig.1:: eine Schnittzeichnung durch einen erfindungsgemäßen Drucksensor,
- Fign.2a-c:: schematische Ansichten von verschiedenen Varianten des Entkopplungselements des erfindungsgemäßen Drucksensors, und.
- Fig. 3a-c:: FEM-Daten zur Verformung einer Druckmeßzelle bei axialer Einspannung.

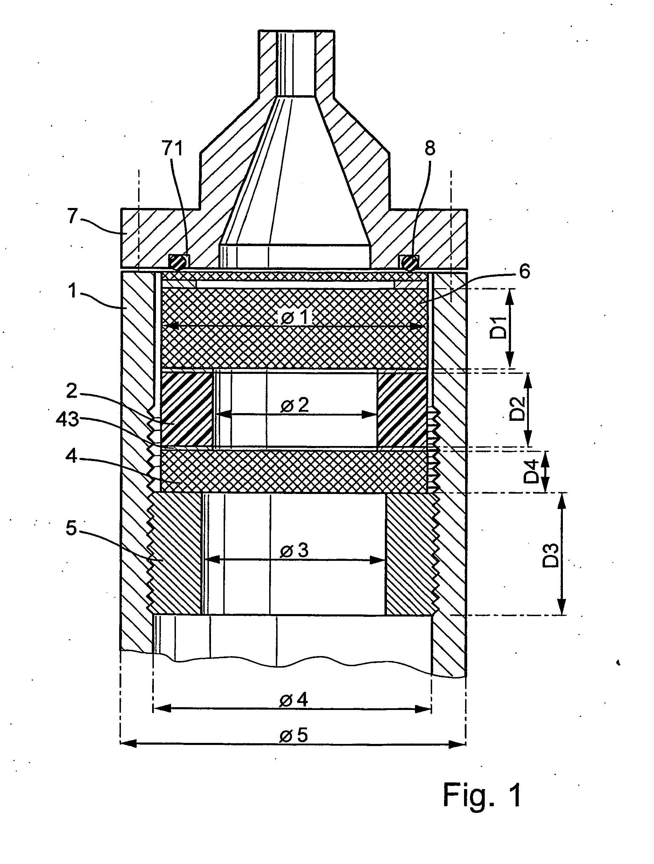

Der in Fig. 1 gezeigte Drucksensor umfaßt eine Druckmeßzelle 6 die einen Grundkörper und eine Meßmembran aus Korund aufweist, die mittels eines Aktivhartlots an der vorderen Stirnfläche des Grundkörper befestigt ist. Ein Stützring aus Korund, dessen Außendurchmesser gleich dem Durchmesser φ₁ des Grundkörpers ist, ist an der rückseitigen Stirnfläche des Grundkörpers mittels eines Aktivhartlots befestigt. Die Druckmeßzelle 6 und der Stützring 2 sind in einem Gehäuse aus Edelstahl angeordnet, welches eine zylindrische Meßzellenkammer 1 und einen Prozeßanschlußflansch 7 aufweist, welcher an einer stirnseitigen Öffnung der Meßzellenkammer 1 angeordnet ist. Der Prozeßanschlußflansch 7 erstreckt sich radial einwärts von der zylindrischen Wand der Meßzellenkammer 1 und bildet so eine axiale Anschlagfläche in der eine Ringnut 71 geformt ist zur Aufnahme eines elastischen Dichtrings 8. Die Druckmeßzelle 6 drückt mit der membranseitigen Stirnfläche axial gegen den Dichtring 8.

Die Einspannkraft ist durch die Kompression des Dichtrings 8 und dessen elastische Eigenschaften gegeben. Die Kompression des Dichtrings wird bei der Montage des Drucksensors über die Position eines Gewinderings 5 eingestellt, der rückseitig über ein Entkopplungselement, hier eine Entkopplungsplatte 4, auf den Stützring 2 wirkt. Die elastischen Eigenschaften des Dichtrings 8 ändern sich durch Alterung bzw. Temperung des Dichtrings unter Kompression. Bei dem beschriebenen Ausführungsbeispiel beträgt die anfängliche Einspannkraft 500 N. Nach einer Temperung des Dichtrings, die beispielsweise im Betrieb durch Reinigungszyklen des Sensors mit Wasserdampf erfolgen kann, wird die Einspannkraft auf 400 N reduziert.

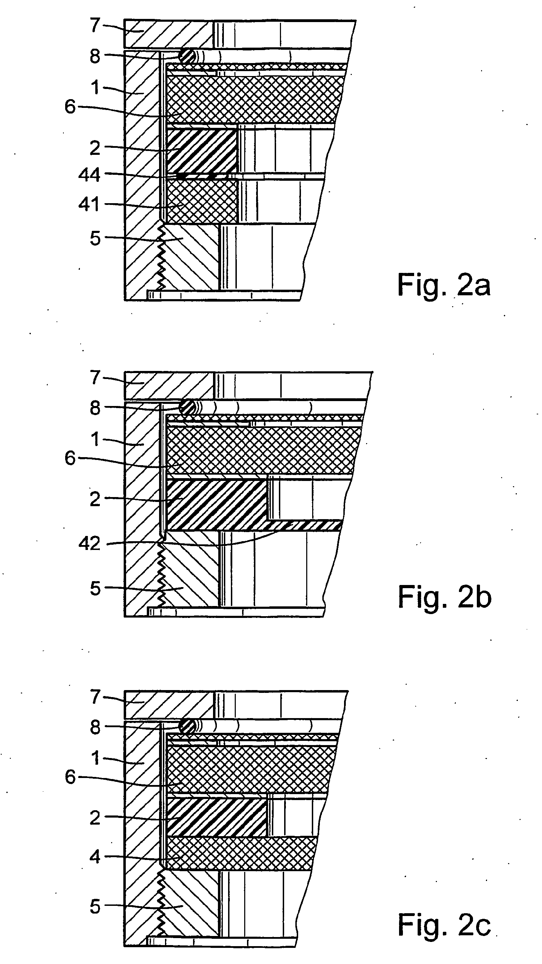

Beispiele für Einspannelemente sind in den Detailansichten in Fign 2 a-c gezeigt.

In Fig. 2a ist als Entkopplungselement ein Entkopplungsring 41 eingesetzt, der die gleichen Abmessungen wie der Stützring 2 aufweist. Zwischen dem Entkopplungsring 41 und dem Stützring 2 ist eine Teflonschicht angeordnet. Die Temperaturhysterese der Spanne wurde durch Einsatz des Stützrings 2 von 0,15% auf etwa 0,01% reduziert.

Fign. 2b und 2c zeigen eine Variante, bei der das Entkopplungselement als steife Entkopplungsplatte realisiert ist. In Fig. 2b ist die Entkopplungsplatte 42 einstückig mit dem Stützring 2 ausgebildet. In Fig. 2c ist eine Entkopplungsplatte 4 nur lose auf den Stützring aufgelegt. Hinsichtlich der Reduzierung des Spannefehlers und der Temperaturhysterese des Spannefehlers spielt die Art der Verbindung 43 der Entkopplungsplatte mit dem Stützring keine Rolle, d.h. die Hysterese kann durch einstückig mit dem Stützring ausgebildete Entkopplungsplatten, durch lose aufgelegte Entkopplungsplatten oder durch beispielsweise mittels eines Hartlots fest mit dem Stützring verbundene Entkopplungsplatten erheblich reduziert werden.

Mit einer Dicke der Entkopplungsplatte von einem Zehntel der Stützringdicke wurde die Temperaturhysterese der Spanne von 0,15% auf 0,03% reduziert. Mit einer Entkopplungsplatte mit der gleichen Dicke wie der Stützring wurde die Temperaturhysterese der Spanne auf 0,01% reduziert. Der Spannefehler aufgrund einer Variation der axialen Einspannkräfte um 20% betrug dabei 0,02%.

Die Identifizierung des optimalen Innendurchmessers φ₂ des Stützrings wird nachfolgend für ein Ausführungsbeispiel erläutert. Die vorgegebenen Abmessungen waren: Grundkörperdurchmesser φ₁=32,4 mm, Dicke des Grundkörpers D1=5mm, Dicke der Membran 160µm, Dicke der Aktivlotschicht 55µm.

Mittels FEM wurde zunächst die Verformung der Druckmeßzelle für verschiedene Innendurchmesser des Stützrings bei axialen Einspannkräfte von 500N und 400N ermittelt, und die daraus folgende Spanne bei Beaufschlagung mit dem Nenndruck (von 170mbar für die verwendete Druckmeßzelle) wurde ebenfalls mit FEM berechnet. Der Spannefehler ergibt sich durch Vergleich der Spannen bei 500 N Einspannkraft und 400 N Einspannkraft. Zur Reduzierung der Rechenzeit wurde hierbei zunächst der Stützring als unendlich steif angenommen. D.h. Verformungen des Stützrings und der Entkopplungsplatte wurden nicht hierbei zunächst nicht berücksichtigt.

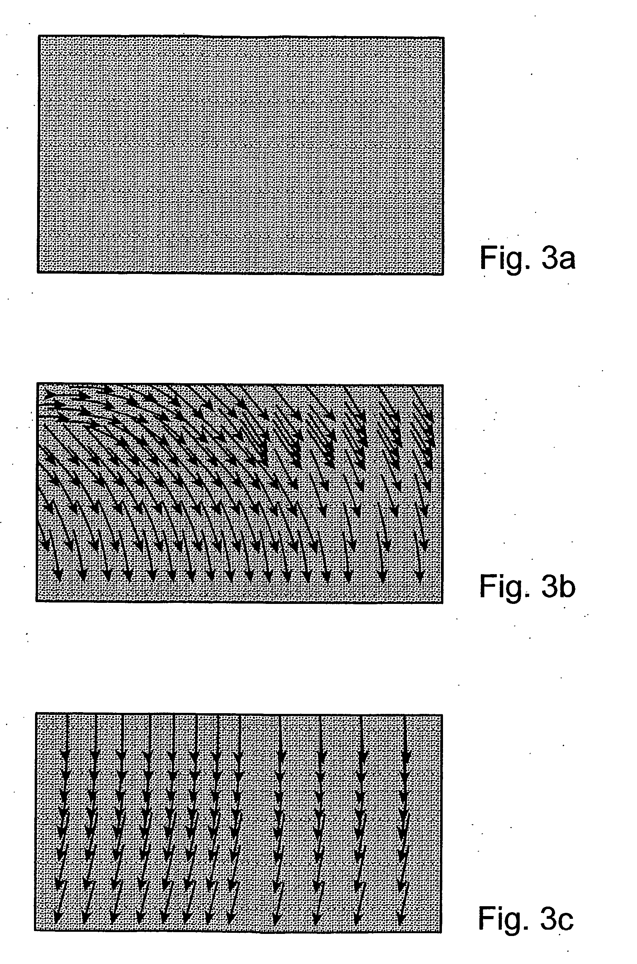

Fign. 3a-c zeigt eine Vektordarstellung der Verformung der Druckmeßzelle aufgrund der axialen Einspannung für einen Ausschnitt um die Innenkante der Fügestelle zwischen dem Grundkörper und der Meßmembran für verschiedene Innendurchmesser φ₂ des Stützrings.

In Fig. 3a beträgt der Innendurchmesser 27,8 mm. Dieser Innendurchmesser ist zu groß. Das gezeigte Vektorfeld bei einer Einspannkraft von 500 N zeigt eine radial einwärts gerichtete Verschiebung, welche die Membransteifigkeit reduziert. Die Spanne wird damit also größer. Die Spannenänderung gegenüber der nicht eingespannten Zelle beträgt etwa +0,8%. Bei einer Einspannkraft von 400N wird die Spannenänderung auf etwa +0,64% reduziert. Der Spannefehler beträgt somit -0,16%.

In Fig. 3b beträgt der Innendurchmesser 10,0 mm dieser Innendurchmesser ist zu klein. Das gezeigte Vektorfeld bei einer Einspannkraft von 500 N zeigt eine radial auswärts gerichtete Verschiebung, welche die Membransteifigkeit erhöht. Die Spanne wird damit also kleiner. Die Spannenänderung gegenüber der nicht eingespannten Zelle beträgt etwa -0, 1 %. Bei einer Einspannkraft von 400N wird die Spannenänderung auf etwa -0,08% reduziert. Der Spannefehler beträgt somit +0,02%.

In Fig. 3c beträgt der Innendurchmesser 23,2 mm dieser Wert ist nahezu ideal. Das gezeigte Vektorfeld bei einer Einspannkraft von 500 N zeigt im Bereich der Fügestelle der Membran kaum eine radiale Verschiebung, welche die Membransteifigkeit verändern könnte. Die Spannenänderung gegenüber der nicht eingespannten Zelle beträgt etwa -0,01%. Bei einer Einspannkraft von 400N wird die Spannenänderung auf etwa -0,008% reduziert. Der Spannefehler beträgt somit +0,002%.

Somit ist für die gegebenen Abmessungen der Druckmeßzelle ein Innendurchmesser für einen Stützring gefunden, der die radiale Verformung der Druckmeßzelle aufgrund axialer Einspannkräfte weitgehend eliminiert. In der praktischen Umsetzung weist der Stützring vorzugsweise eine Dicke auf, die nicht weniger als die Dicke der Druckmeßzelle ist, um der Annahme einer hinreichend steifen axialen Abstützung gerecht zu werden.

Mittels FEM wurde anschließend mit den zuvor ermittelten Stützringdaten als Ausgangspunkt die Verformung aller Komponenten des Drucksensors für axiale Einspannkräfte von 500N und 400N ermittelt. Hierbei wurde für die Entkopplungsplatte und für den Stützring das gleiche Elastizitätsmodul angenommen wie für den Grundkörper und die Membran der Druckmeßzelle, nämlich das von Korund. Für das Gehäuse wurde VA-Stahl und für den Einspannring Messing angesetzt. Die aus der Verformung folgende Spanne bei Beaufschlagung mit dem Nenndruck wurde ebenfalls mit FEM berechnet. Der Spannefehler ergab sich wie zuvor durch Vergleich der Spannen bei 500 N Einspannkraft und 400 N Einspannkraft. Es wurde ein Spannenfehler von weniger als 0,02% ermittelt.

Ebenfalls wurde mittels FEM die Verformung der Komponenten während eines Temperaturzyklus (Raumtemperatur -> -40°C -> 150°C -> Raumtemperatur) bestimmt, um die Temperaturhysterese der Spanne zu ermitteln. Durch Variation der Dicke der Entkopplungsplatte konnte eine Geometrie identifiziert werden, bei der die Temperaturhysterese der Spanne unter einem angestrebten Grenzwert von 0,03% liegt. Durch weitere Iterationen mit Variationen der Stützringgeometrie und der Stärke auf einen akzeptablen Wert ist eine weitere Verbesserung zu erwarten.

## Patentansprüche

1. Drucksensor, umfassend
eine Druckmeßzelle mit einem im wesentlichen zylindrischen Grundkörper aus Korund mit einem ersten Durchmesser und einer ersten Dicke, einen an einer Stirnfläche des Grundkörpers gefügten Meßmembran aus Korund mit einem zweiten Durchmesser und einer zweiten Dicke,
einen elastischen Dichtring mit einem dritten Durchmesser und einer dritten Dicke,
einen Stützring aus Korund mit einem vierten Außendurchmesser, einem vierten Innendurchmesser und einer vierten Dicke, wobei der Stützring mit der von der Meßmembran abgewandten Stirnseite der Druckmeßzelle fest verbunden ist,
wobei der Stützring mindestens die Dicke des Grundkörpers aufweist,
wobei der Außendurchmesser des Stützrings gleich dem Durchmesser des Grundkörpers ist.
einen Einspannring mit ersten Eingriffsmitteln und
ein Gehäuse zur Aufnahme einer Druckmeßzelle, wobei das Gehäuse eine axiale Anschlagfläche für den Dichtring und zweite Eingriffsmittel, die in die ersten Eingriffsmittel eingreifen, aufweist;
wobei die Druckmeßzelle zwischen dem elastischen Dichtring, der zwischen der axialen Anschlagfläche des Gehäuses und der membranseitigen Stirnseite der Druckmeßzelle angeordnet ist, und dem Stützring, mittels des Einspannrings axial eingespannt ist,
**dadurch gekennzeichnet, daß**
zwischen dem Einspannring und dem Stützring ein steifes Entkopplungselement aus Korund angeordnet ist, wobei
das Entkopplungselement eine Entkopplungsplatte oder einen Entkopplungsring aufweist, wobei zwischen dem Entkopplungsring und dem Stützring Mittel zur Minimierung der Reibung einbringbar sind, wobei
die Abmessungen des Stützrings umfassend den Innendurchmesser und des Entkopplungselements solchermaßen auf die Abmessungen des Dichtrings und der Druckmesszelle abgestimmt sind, daß eine durch die axiale Einspannung der Druckmeßzelle bedingte radiale Verformung der membranseitigen Stirnfläche so gering ist, daß der Spannenfehler des Drucksensors aufgrund einer Reduzierung der axialen Einspannkraft um mindestens 20% nicht mehr als etwa 0,02% beträgt und die Temperaturhysterese der Spanne
nach einem Temperaturzyklus von Raumtemperatur über -40 °C und 150°C zurück auf Raumtemperatur oder nach einem Temperaturzyklus von Raumtemperatur über 150 °C und -40 °C zurück auf Raumtemperatur nicht mehr als etwa 0.03 % beträgt.

2. Drucksensor nach Anspruch 1, wobei der Innendurchmesser des Stützrings so gewählt ist, daß der Spannenfehler bei einer Reduzierung der Einspannkraft um mindestens 10% bzw. mindestens 20% nicht mehr als etwa 0,01% beträgt.

3. Drucksensor nach einem der Ansprüche 1 bis 2, wobei die Temperaturhysterese der Spanne nicht mehr als 0,02% und besonders bevorzugt nicht mehr als 0,01% beträgt.

4. Drucksensor nach Anspruch 1, wobei die Entkopplungsplatte einen Durchmesser aufweist, der gleich dem Außendurchmesser des Stützrings ist.

5. Drucksensor nach Anspruch 1 oder 4, wobei die Entkopplungsplatte nicht fest mit dem Stützring verbunden ist.

6. Drucksensor nach Anspruch 1, wobei der Entkopplungsring etwa die gleichen Abmessungen wie der Stützring aufweist.

7. Drucksensor nach einem der Ansprüche 1 oder 6, wobei zwischen dem Stützring und dem Entkopplungsring Mittel zur Minimierung der Reibung vorhanden sind.

8. Drucksensor nach Anspruch 7, wobei der Haftreibungskoeffizient zwischen dem Stützring und dem Entkopplungsring weniger als 0,2 beträgt.

9. Verfahren zur iterativen Optimierung der Abmessungen eines Stützrings und eines Entkopplungselements für einen Drucksensor nach einem der vorherigen Ansprüche umfassend die Schritte:
(i) Festlegen einer Geometrie für den Stützring und für das Entkopplungselement
(ii) Berechnen einer ersten Spannenänderung des Drucksensors unter einer ersten axialen Einspannungskraft;
(iii) Berechnen einer zweiten Spannenänderung des Drucksensors unter einer zweiten axialen Einspannungskraft;
(iv) Ermittlung des Spannefehlers durch Vergleich der ersten Spannenänderung mit der zweiten Spannenänderung;
(v) Bewertung des Spannefehlers;
(vi) und Ermittlung der Temperaturhysterese der Spanne und Bewertung der Temperaturhysterese der Spanne, ggf. unter der Bedingung das der Spannefehler hinreichend klein ist,
Variation der Geometrie des Stützrings und ggf. des Entkopplungselements, und wiederholen der Schritte (ii) bis (vii) bis eine geeignete Geometrie gefunden ist, bei welcher der Spannenfehler des Drucksensors aufgrund einer Reduzierung der axialen Einspannkraft um mindestens 20% nicht mehr als etwa 0,02% beträgt, und die Temperaturhysterese der Spanne nicht mehr als etwa 0,03% beträgt.

## Claims

1. Pressure sensor, comprising:
a pressure measuring cell with a primarily cylindrical corundum meter body with a first diameter and a first thickness, a corundum measuring membrane joined to a face of the meter body with a second diameter and a second thickness
an elastic sealing ring with a third diameter and a third thickness
a corundum thrust ring with a fourth outer diameter, a fourth internal diameter and a fourth thickness, whereby the thrust ring is permanently connected to the face of the pressure measuring cell facing away from the measuring membrane, **characterized in that** the thrust ring exhibits the thickness of the meter body at least, and
**characterized in that** the outer diameter of the thrust ring is the same as the diameter of the meter body
a clamping ring with primary contact elements and
a housing for accommodating a pressure measuring cell, **characterized in that** the housing exhibits an axial stop face for the sealing ring and secondary contact elements that interconnect with the first contact elements, whereby the pressure measuring cell is axially clamped, by means of the clamping ring, between the elastic sealing ring and the thrust ring, the sealing ring being arranged between the axial stop face of the housing and the face of the pressure measuring cell on the membrane side,
**characterized in that:**
a rigid corundum decoupler element is arranged between the clamping ring and the thrust ring, whereby the decoupler element exhibits a decoupler plate or a decoupler ring, whereby means for reducing friction can be integrated between the decoupler ring and the thrust ring, whereby
the dimensions of the thrust ring, comprising the internal diameter, and the decoupler element are aligned with the dimensions of the sealing ring and the pressure measuring cell in such a way that a radial distortion of the face on the membrane side, resulting from axially clamping the pressure measuring cell, is so small that the span error of the pressure sensor - caused by reducing the axial clamping force by at least 20% - does not exceed approx. 0.02%, and the temperature hysteresis of the span does not exceed approx. 0.03% following a temperature cycle that goes from room temperature to -40°C to 150°C and back to room temperature, or following a temperature cycle that goes from room temperature to 150°C to -40°C and back to room temperature.

2. Pressure sensor as per Claim 1, **characterized in that** the internal diameter of the thrust ring is selected in such a way that the span error does not exceed approximately 0.01% when the clamping force is reduced by at least 10% or at least 20%.

3. Pressure sensor as per one of the Claims 1 to 2, **characterized in that** the temperature hysteresis of the span does not exceed 0.02% and preferably does not exceed 0.01 %.

4. Pressure sensor as per Claim 1, **characterized in that** the decoupler plate exhibits a diameter which is the same as the outer diameter of the thrust ring.

5. Pressure sensor as per Claim 1 or 4, **characterized in that** the decoupler plate is not permanently connected to the thrust ring.

6. Pressure sensor as per Claim 1, **characterized in that** the decoupler ring has approximately the same dimensions as the thrust ring.

7. Pressure sensor as per one of the Claims 1 or 6, whereby elements to minimize friction are present between the thrust ring and the decoupler ring.

8. Pressure sensor as per Claim 7, where the coefficient of static friction between the thrust ring and the decoupler ring is less than 0.2.

9. Method for the iterative optimization of the dimensions of a thrust ring and a decoupler element for a pressure sensor as per one of the previous claims, comprising the following steps:
(i) a geometry is specified for the thrust ring and the decoupler element
(ii) a first change in span of the pressure sensor due to a first axial clamping force is calculated
(iii) a second change in span of the pressure sensor due to a second axial clamping force is calculated
(iv) the span error is determined by comparing the first change in span with the second change in span
(v) the span error is evaluated
(vi) the temperature hysteresis of the span is determined and the temperature hysteresis of the span is evaluated, where applicable under the condition that the span error is sufficiently small
The geometry of the thrust ring and, where applicable, the decoupler element is varied and steps (ii) to (vii) are repeated until a suitable geometry is found where the span error of the pressure sensor, resulting from a reduction in the axial clamping force by at least 20%, does not exceed 0.02%, and the temperature hysteresis of the span does not exceed 0.03%.

## Revendications

1. Capteur de pression, comprenant
une cellule de mesure de pression avec un corps de base pour l'essentiel cylindrique, en corindon, d'un premier diamètre et d'une première épaisseur, une membrane de mesure en corindon aboutée sur une face frontale du corps de base d'un deuxième diamètre et d'une deuxième épaisseur,
une bague d'étanchéité élastique d'un troisième diamètre et d'une troisième épaisseur,
une bague d'appui en corindon d'un quatrième diamètre extérieur, d'un quatrième diamètre intérieur et d'une quatrième épaisseur, la bague d'appui étant reliée de façon fixe avec la face frontale de la cellule de mesure de pression, face se trouvant à l'opposé de la membrane de mesure,
la bague d'appui présentant au minimum l'épaisseur du corps de base,
le diamètre extérieur de la bague d'appui étant égal au diamètre du corps de base.
une bague de serrage avec de premiers éléments de prise et
un boîtier destiné au logement d'une cellule de mesure de pression, le boîtier présentant une surface de butée axiale pour la bague d'étanchéité et des deuxièmes éléments de prise, qui s'engrènent dans les premiers éléments de prise,
la cellule de mesure de pression étant serrée axialement au moyen de la bague de serrage, entre la bague d'étanchéité élastique, qui est disposée entre la surface de butée axiale du boîtier et la face frontale côté membrane de la cellule de mesure de pression, et la bague d'appui,
**caractérisé en ce que**
entre la bague de serrage et la bague d'appui est disposé un élément de découplage en corindon, l'élément de découplage étant une plaque de découplage comportant une bague de découplage, des moyens destinés à minimiser le frottement pouvant être insérés entre la bague de découplage et la bague d'appui,
les dimensions de la bague d'appui, enveloppant le diamètre intérieur, et de l'élément de découplage étant adaptées aux dimensions de la bague d'étanchéité et de la cellule de mesure de pression de telle manière qu'une déformation radiale de la face frontale côté membrane due au serrage axial de la cellule de mesure de pression est si faible, que l'erreur d'étendue du capteur de pression en raison d'une réduction de la force de serrage axiale d'au moins 20 % ne s'élève pas à plus de 0,02 % env., et l'hystérésis de température de l'étendue, après un cycle de température "température ambiante -> -40 °C -> 150 °C et retour à la température ambiante, ou après un cycle de température "température ambiante -> 150 °C -> -40 °C et retour à la température ambiante, ne s'élève pas à plus de 0,03 % env.

2. Capteur de pression selon la revendication 1, pour lequel le diamètre intérieur de la bague d'appui est choisi de telle manière que l'erreur d'étendue en cas de réduction de la force de serrage d'au moins 10 % ou d'au moins 20 % ne s'élève pas à plus de 0,01 % env.

3. Capteur de pression selon la revendication 1 et 2, pour lequel l'hystérésis de température de l'étendue ne s'élève pas à plus de 0,02 % et, particulièrement de préférence, pas à plus de 0,01 %.

4. Capteur de pression selon la revendication 1, pour lequel la plaque de découplage présente un diamètre égal au diamètre extérieur de la bague d'appui.

5. Capteur de pression selon la revendication 1 ou 4, pour lequel la plaque de découplage n'est pas reliée de façon fixe avec la bague d'appui.

6. Capteur de pression selon la revendication 1, pour lequel la bague de découplage présente à peu près les mêmes dimensions que la bague d'appui.

7. Capteur de pression selon la revendication 1 ou 6, pour lequel se trouvent, entre la bague d'appui et la bague de découplage, des moyens destinés à la minimisation du frottement.

8. Capteur de pression selon la revendication 7, pour lequel le coefficient de frottement statique entre la bague d'appui et la bague de découplage est inférieur à 0,2.

9. Procédé destiné à l'optimisation des dimensions d'une bague d'appui et d'un élément de découplage pour un capteur de pression selon l'une des revendications précédentes, comprenant les étapes :
(i) Définition d'une géométrie pour la bague d'appui et pour l'élément de découplage.
(ii) Calcul d'un premier changement d'étendue du capteur de pression dû à une première force de serrage axiale ;
(iii) Calcul d'un deuxième changement d'étendue du capteur de pression dû à une deuxième force de serrage axiale ;
(iv) Détermination d'une erreur d'étendue par comparaison du premier changement d'étendue avec le deuxième changement d'étendue ;
(v) Évaluation de l'erreur d'étendue ;
(vi) et détermination de l'hystérésis de l'étendue et évaluation de l'hystérésis de température de l'étendue, le cas échéant à condition que l'erreur d'étendue est suffisamment petite,
Variation de la géométrie de la bague d'appui et, le cas échéant, de l'élément de découplage, et répétition des étapes (ii) à (vii), jusqu'à ce que soit trouvée une géométrie appropriée, pour laquelle l'erreur d'étendue du capteur de pression en raison d'une réduction de la force de serrage axiale d'au moins 20 % ne s'élève pas à plus de 0,02 % env., et l'hystérésis de température de l'étendue pas à plus de 0,03 % env.
